# EUROPEAN PATENT SPECIFICATION

(11) **EP 3 294 598 B1**
(45) Date of publication and mention of the grant of the patent: **17.01.2024**
(21) Application number: 16724848.3
(22) Date of filing: 27.04.2016
(51) Int. Cl.: B60W 10/06, B60W 10/16, B60W 10/20, B60W 30/04, B62D 61/06, B60R 16/023

(54) **AN ACTIVE ROLL-OVER PREVENTION DEVICE AND METHOD FOR A THREE-WHEELED VEHICLE**
VORRICHTUNG UND VERFAHREN ZUR AKTIVEN ÜBERROLLPRÄVENTION FÜR EIN DREIRÄDRIGES FAHRZEUG
DISPOSITIF ET PROCÉDÉ DE PRÉVENTION DE TONNEAU POUR UN VÉHICULE À TROIS ROUES

(30) Priority: 11.05.2015 IN 2387CH2015
(43) Date of publication of application: 21.03.2018
(73) Proprietor: Robert Bosch GmbH, 70442 Stuttgart (DE)
(72) Inventor: LICH, Thomas, 73733 Esslingen (DE); TEN ZWEEGE, Remco, 71272 Renningen (DE); D'ADDETTA, Gian Antonio, 70563 Stuttgart (DE)
(86) International application number: PCT/EP2016/059384
(87) International publication number: WO 2016/180637

(56) References cited:
- EP-A1- 1 690 748
- US-A1- 2006 180 372
- US-A1- 2009 152 940
- US-A1- 2013 184 936

## Description

### Field of the invention:

The invention relates to a roll-over prevention device and method for a three-wheeled vehicle such as auto rickshaw, tuk-tuk, etc.

### Background of the invention:

Three-wheelers such as auto rickshaws are very common and popular means of transportation in developing countries like India. Such three wheelers are often loaded heavily with people and luggage which creates imbalance and safety concern. Further if the three-wheelers are driven at high speed, the chances of toppling are higher.

Despite these risks, the provision of safety features in these vehicles is not as prevalent as compared to those present in the passenger cars as the three-wheeled vehicles are considerably cost-effective vehicles.

Some of the luxurious passenger cars do have anti-roll safety feature; however, topologies, arrangement and working of different vehicular sub-systems of a three-wheeler are very much different from those of the 4-wheelers; therefore the implementation of such feature in three-wheelers is a challenging task both technically as well as functionally.

WO2013058693 discloses a protection equipment in a three-wheeled vehicle to reduce the risk of injuries to a driver in case of a roll-over accident.

US-7497525 discloses a roll-related reactive system for three wheelers, which activates brakes based on the steering angle.

US7261303 discloses system to reduce the risk of roll-over prevention in a four wheeler by controlling the actuation of a suspension of the vehicle

US 2006/0180372 A1 discloses an electronic stability system on a three-wheeled vehicle controlling certain operating parameters of the vehicle based on sensed input from the three wheels.

US 2009/0152940 A1 discloses a three-wheel vehicle electronic stability system adapted to calculate a dynamic status of the vehicle based on inputs received from sensors.

US 2013/0184936 A1 discloses a method for mitigating vehicle rollovers. A tilt threshold value is determined and compared to a roll angle.

### Brief description of the invention:

The invention discloses an active roll-over prevention device for a three-wheeled vehicle as defined in claim 1.

The invention also discloses a method for preventing roll-over condition in a three-wheeled vehicle as defined in claim 5.

### Brief description of the accompanying drawings:

An embodiment of the invention is described with reference to the following accompanying drawings,
Fig. 1 shows a schematic block diagram of an active roll-over prevention device for a three-wheeled vehicle, in accordance with an embodiment of the invention; and
Fig. 2 illustrates a flow chart of a method for preventing roll-over condition for a three-wheeled vehicle, in accordance with an embodiment of the invention.

### Detailed description of the embodiments:

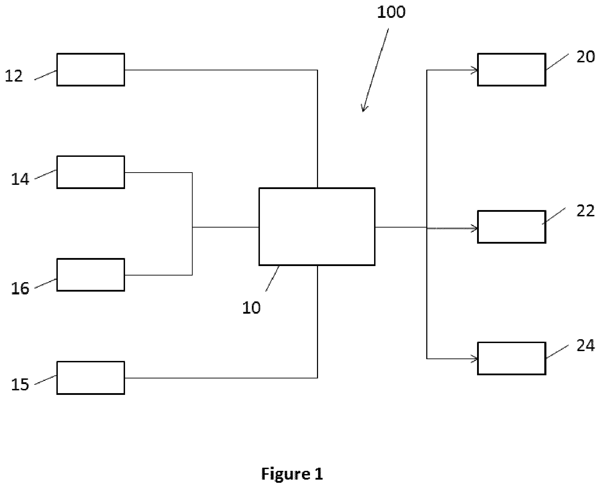

Fig. 1 shows a schematic block diagram of an active roll-over prevention device for a three-wheeled vehicle, in accordance with an embodiment of the invention. The three-wheeled vehicles can be a vehicle having single front wheel and a pair of rear wheels.

It can be a vehicle with a single rear wheel and a pair of front wheels. The active roll-over prevention device 100 comprises a controller 10 such as an Electronic Control Unit (ECU) which is connected to one or more sensors 12, 14, and 16. The controller 10 detects the possibility of a roll-over condition based on vehicle load, speed and acceleration from the one or more sensors 12, 14, 16.

For example, the controller 10 receives a signal from a load sensor 12 placed proximate to the one or more shock absorbers of the three-wheeled vehicle. The controller 10 judges if there is any load-imbalance from the signal output by the load sensor 12 and detects the possibility of the roll-over condition of the vehicle.

The controller 10 also receives a speed signal from a speed sensor 14. For example, the controller 10 receives a wheel speed signal from a wheel speed sensor 14. The controller 10 detects the possibility of the roll-over condition based on signal from the wheel speed sensor.

Alternately, the controller 10 also receives a vehicle speed signal from a speedometer. The controller 10 detects the possibility of the roll-over condition based on signal from the speedometer.

Additionally, the controller 10 also receives signal from a steering-angle sensor 15 and the speed sensor 14 such as speedometer or the wheel speed sensor. For instance, when the vehicle is over steered especially when the speed of the vehicle is higher than a threshold, then the possibility of the roll-over condition is high. The controller 10 determines the risk of a roll-over condition based on signals from both speed sensor 14 and the steering angle sensor 15.

In another embodiment of the invention, the controller 10 receives signal from one or more acceleration sensors 16 placed proximate to one or more wheels of the three-wheeled vehicle and detects the possibility of the roll-over condition of the vehicle based on the acceleration of the vehicle.

As explained earlier, the controller 10 receives signals from one or more sensors 12,14, 15, 16, and detects the possibility of a roll-over condition of the vehicle.

Additionally, the active roll-over prevention device 100 comprises one or more actuators 20, 22, 24. The controller 10 drives these actuators 20, 22, 24 to prevent the roll-over condition of the three-wheeled vehicle.

In line with the invention, the actuator is a throttle actuator 20 which is controlled by the controller 10 for regulating the supply of fuel to the engine of the three-wheeled vehicle. When there is a possibility of roll-over condition, the controller 10 regulates the throttle actuator 10 so that the fuel supply to the engine is reduced or stopped to avoid roll-over condition.

The invention foresees to control also a steering actuator 22. The steering actuator 22 is controlled to vary the restraining force given to the steering wheel/steering handle of the three-wheeled vehicle. When the possibility of roll-over condition is detected, the controller 10 regulates the steering actuator 22 to offer more restraining force to move the steering handle/steering wheel by the driver to prevent roll-over condition.

The invention foresees to control also a differential actuator 24. The differential actuator 24 is controlled to selectively distribute input torque to the left/right wheels to avoid the roll-over condition. For example, a clutch pack is selectively actuated by a motor 24 (actuator) to connect a left/right wheel to a differential housing to distribute more torque to the left/right wheel to avoid toppling or roll-over of the vehicle.

The controller 10 can make use of the signals from one or more sensors 12,14,15,16 to detect the possibility of occurrence of a roll-over condition. Once the controller 10 determines the possibility of the occurrence of the roll-over condition, it drives or controls one or more actuators 20, 22, 24 to prevent the roll-over condition.

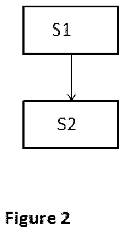

Fig. 2 illustrates a flow chart of a method for preventing roll-over condition for a three-wheeled vehicle, in accordance with an embodiment of the invention. At step S1, the possibility of an over-roll condition is detected based on at least one of a vehicle load, speed and acceleration. A throttle actuator, a steering actuator and a differential actuator are driven to prevent said roll-over condition of the three-wheeled vehicle based on the at least one of the vehicle load, speed and acceleration.

The invention effectively prevents the roll-over condition, thereby avoiding injury and damage to passengers, to vehicles and possibly to other road users (pedestrians, cyclists, etc.).

The invention is simple to implement hence offers a cost-effective solution.

It should be understood that embodiments explained in the description above are only illustrative and do not limit the scope of this invention. Many such embodiments and other modifications and changes in the embodiment explained in the description are envisaged. The scope of the invention is only limited by the scope of the claims.

## Claims

1. An active roll-over prevention device (100) for a three-wheeled vehicle, said active roll-over prevention device (100) comprises a controller (10) which is adapted to
- detect the possibility of an over-roll condition based on at least one of a vehicle load, speed and acceleration from at least one sensor (12, 14, 16); and **characterised in that** the controller (10) is adapted to
- drive a throttle actuator (20), a steering actuator (22) and a differential actuator (24) to prevent said roll-over condition of said three-wheeled vehicle, wherein the controller (10) regulates the throttle actuator (20) so that the fuel supply to the engine is reduced or stopped to avoid the roll-over condition, wherein the controller (10) regulates the steering actuator (22) to offer more restraining force to move the steering handle or steering wheel by the driver to prevent the roll-over condition, wherein the differential actuator (24) is controlled to selectively distribute input torque to the left or right wheels to avoid the roll-over condition.

2. The active roll-over prevention device (100) of claim 1, wherein said at least one sensor is a load sensor (12) placed proximate to at least one shock absorber in the three-wheeled vehicle.

3. The active roll-over prevention device (100) of claim 1, wherein said at least one sensor is speed sensor (14).

4. The active roll-over prevention device (100) of claim 3, wherein the speed sensor is at least one of a speedometer and a wheel speed sensor.

5. A method for active roll-over prevention in a three-wheeled vehicle, **characterised in that** said method comprises the steps of:
- detecting the possibility of an over-roll based on at least one of a vehicle load, wheel speed and acceleration from at least one sensor (12, 14, 16); and
- driving a throttle actuator (20), a steering actuator (22) and a differential actuator (24) to prevent said roll-over condition of said three-wheeled vehicle, the throttle actuator (20) is regulated so that the fuel supply to the engine is reduced or stopped to avoid the roll-over condition, wherein the steering actuator (22) is regulated to offer more restraining force to move the steering handle or steering wheel by the driver to prevent the roll-over condition, wherein the differential actuator (24) is controlled to selectively distribute input torque to the left or right wheels to avoid the roll-over condition.

6. The method of claim 5 wherein driving step includes controlling said throttle actuator (20), said steering actuator (22) and said differential actuator (24) based on at least one of a vehicle speed, lateral acceleration and load imbalance from the respective sensors (12, 14, 16)

## Patentansprüche

1. Aktive Überrollschutzvorrichtung (100) für ein dreirädriges Fahrzeug, wobei die aktive Überrollschutzvorrichtung (100) eine Steuerung (10) umfasst, die dazu ausgeführt ist:
- die Möglichkeit eines Überrollzustands basierend auf einer Fahrzeuglast und/oder einer Drehzahl und/oder einer Beschleunigung von mindestens einem Sensor (12, 14, 16) zu detektieren; und **dadurch gekennzeichnet, dass** die Steuerung (10) dazu ausgeführt ist:
- einen Drosselklappenbetätiger (20), einen Lenkaktuator (22) und einen Differenzialaktuator (24) dahingehend anzusteuern, den Überrollzustand des dreirädrigen Fahrzeugs zu verhindern, wobei die Steuerung (10) den Drosselklappenbetätiger (20) derart reguliert, dass die Kraftstoffzufuhr zum Motor verringert oder gestoppt wird, um den Überrollzustand zu vermeiden, wobei die Steuerung (10) den Lenkaktuator (22) reguliert, um eine größere Rückhaltekraft vorzusehen, um den Steuergriff oder das Lenkrad vom Fahrer zu bewegen, um den Überrollzustand zu verhindern, wobei der Differenzialaktuator (24) gesteuert wird, um das Eingangsdrehmoment selektiv auf die linken oder rechten Räder zu verteilen, um den Überrollzustand zu verhindern.

2. Aktive Überrollschutzvorrichtung (100) nach Anspruch 1, wobei der mindestens eine Sensor ein Lastsensor (12) ist, der neben mindestens einem Stoßdämpfer im dreirädrigen Fahrzeug platziert ist.

3. Aktive Überrollschutzvorrichtung (100) nach Anspruch 1, wobei der mindestens eine Sensor ein Drehzahlsensor (14) ist.

4. Aktive Überrollschutzvorrichtung (100) nach Anspruch 3, wobei der Drehzahlsensor ein Tachometer und/oder ein Raddrehzahlsensor ist.

5. Verfahren zum aktiven Überrollschutz in einem dreirädrigen Fahrzeug, **dadurch gekennzeichnet, dass** das Verfahren die folgenden Schritte umfasst:
- Detektieren der Möglichkeit eines Überrollens basierend auf einer Fahrzeuglast und/oder einer Raddrehzahl und/oder -beschleunigung von mindestens einem Sensor (12, 14, 16) und
- Ansteuern eines Drosselklappenbetätigers (20), eines Lenkaktuators (22) und eines Differenzialaktuators (24) zum Verhindern des Überrollzustands des dreirädrigen Fahrzeugs, wobei der Drosselklappenbetätiger (20) derart reguliert ist, dass die Kraftstoffzufuhr zum Motor verringert oder gestoppt wird, um den Überrollzustand zu vermeiden, wobei der Lenkaktuator (22) reguliert ist, um eine größere Rückhaltekraft vorzusehen, um den Steuergriff oder das Lenkrad vom Fahrer zu bewegen, um den Überrollzustand zu verhindern, wobei der Differenzialaktuator (24) gesteuert wird, um das Eingangsdrehmoment selektiv auf die linken oder rechten Räder zu verteilen, um den Überrollzustand zu verhindern.

6. Verfahren nach Anspruch 5, wobei der Ansteuerschritt Steuern des Drosselklappenbetätigers (20), des Lenkaktuators (22) und des Differenzialaktuators (24) basierend auf einer Fahrzeuggeschwindigkeit und/oder einer Querbeschleunigung und/oder eines Lastungleichgewichts von den jeweiligen Sensoren (12, 14, 16) umfasst.

## Revendications

1. Dispositif de prévention de tonneau actif (100) pour un véhicule à trois roues, ledit dispositif de prévention de tonneau actif (100) comprenant un dispositif de commande (10) qui est conçu pour
- détecter la possibilité d'une condition de renversement sur la base d'au moins une charge, une vitesse et une accélération de véhicule provenant d'au moins un capteur (12, 14, 16) ; et **caractérisé en ce que** le dispositif de commande (10) est conçu pour
- entraîner un actionneur de papillon des gaz (20), un actionneur de direction (22) et un actionneur de différentiel (24) pour empêcher ladite condition de renversement dudit véhicule à trois roues, le dispositif de commande (10) régulant l'actionneur de papillon des gaz (20) de sorte que l'alimentation en carburant du moteur soit réduite ou arrêtée pour éviter la condition de renversement, le dispositif de commande (10) régulant l'actionneur de direction (22) pour offrir plus de force de retenue pour déplacer la poignée de direction ou le volant de direction par le conducteur afin d'empêcher la condition de renversement, l'actionneur de différentiel (24) étant commandé pour distribuer sélectivement le couple d'entrée à la roue gauche ou droite afin d'éviter la condition de renversement.

2. Dispositif de prévention de tonneau actif (100) selon la revendication 1, ledit au moins un capteur étant un capteur de charge (12) placé à proximité d'au moins un amortisseur de choc dans le véhicule à trois roues.

3. Dispositif de prévention de tonneau actif (100) selon la revendication 1, ledit au moins un capteur étant un capteur de vitesse (14).

4. Dispositif de prévention de tonneau actif (100) selon la revendication 3, le capteur de vitesse étant au moins un indicateur de vitesse et un capteur de vitesse de roue.

5. Procédé de prévention active de tonneau dans un véhicule à trois roues, **caractérisé en ce que** ledit procédé comprend les étapes consistant à :
- détecter la possibilité d'un renversement sur la base d'au moins une charge de véhicule, une vitesse de roue et une accélération provenant d'au moins un capteur (12, 14, 16) ; et
- entraîner un actionneur de papillon des gaz (20), un actionneur de direction (22) et un actionneur de différentiel (24) pour empêcher ladite condition de renversement dudit véhicule à trois roues, l'actionneur de papillon des gaz (20) étant régulé de sorte que l'alimentation en carburant du moteur soit réduite ou arrêtée pour éviter la condition de renversement, l'actionneur de direction (22) étant régulé pour offrir plus de force de retenue pour déplacer la poignée de direction ou le volant de direction par le conducteur afin d'empêcher la condition de renversement, l'actionneur de différentiel (24) étant commandé pour distribuer sélectivement le couple d'entrée à la roue gauche ou droite afin d'éviter la condition de renversement.

6. Procédé selon la revendication 5, l'étape d'entraînement comprenant l'étape consistant à commander ledit actionneur de papillon des gaz (20), ledit actionneur de direction (22) et ledit actionneur de différentiel (24) sur la base d'au moins l'un parmi une vitesse de véhicule, une accélération latérale et un déséquilibre de charge provenant des capteurs (12, 14, 16) respectifs.
